# EUROPEAN PATENT APPLICATION

(11) **EP 2 575 201 A1**
(43) Date of publication of application: **03.04.2013**
(21) Application number: 12186164.5
(22) Date of filing: 26.09.2012
(51) Int. Cl.: H01M 4/58, H01M 10/0525, H01M 4/525, H01M 4/36

(54) **Non-aqueous electrolyte secondary battery comprising lithium vanadium phosphate and lithium nickel composite oxide as positive electrode active material**

(30) Priority: 30.09.2011 JP 2011216098; 09.07.2012 JP 2012153335
(71) Applicant: Fuji Jukogyo Kabushiki Kaisha, Tokyo 160-8316 (JP)
(72) Inventor: Yanagita, Hideo, Tokyo, Tokyo 160-8316 (JP); Takimoto, Kazuki, Tokyo, Tokyo 160-8316 (JP)
(74) Representative: Sajda, Wolf E.

(57) **Abstract**

In a non-aqueous electrolyte secondary battery, a positive electrode active material includes a carbon-coated lithium vanadium phosphate and a lithium nickel composite oxide. A negative electrode active material includes a carbon-based active material capable of intercalating and deintercalating lithium ions. When a first charge capacity of a negative electrode per unit area is "x" (mAh/cm²), and a first charge capacity of a positive electrode per unit area is "y" (mAh/cm²), a relation of "x" and "y" satisfies 0.6 ≤ y/x ≤ 0.92.

## Description

### BACKGROUND OF THE INVENTION

### FIELD OF THE INVENTION

The present invention relates to a non-aqueous electrolyte secondary battery. Particularly, the present invention relates to a non-aqueous electrolyte secondary battery comprising lithium vanadium phosphate and lithium nickel composite oxide as positive electrode active material.

### RELATED ART

Non-aqueous electrolyte secondary batteries such as lithium ion secondary batteries are currently used as power sources of electric appliance and the like, and furthermore, as power sources of electronic automobiles (such as EV (electric vehicle) and HEV (hybrid electric vehicle), etc.). In addition, non-aqueous electrolyte secondary batteries such as lithium ion secondary batteries require further improvement in more characteristics, such as improvement in energy density (realization of high capacity), improvement in power density (realization of high power) improvement in cycle characteristics (improvement in cycle lifespan), high safety and the like.

Recently, most of lithium ion secondary batteries used for small-sized electric appliances and the like use lithium composite oxide such as LiCoO₂ as positive electrode active materials and realize electric storage devices with high capacity and long lifespan.
However, these positive-electrode active materials have problems that, at a high temperature and a high electric potential when an abnormality occurs, the positive-electrode active materials excessively react with an electrolyte to generate a heat while releasing oxygen. In the worst case, they may ignite.

Recently, olivine-type Fe(LiMnPO₄), olivine-type Mn(LiMnPO₄) having similar crystalline structures with the olivine-type Fe, and the like are considered as positive electrode active materials that exhibit superior thermal stability even in high temperature and high electric potential states.
Such positive-electrode active materials have practically used, for example, in electrical tools. However, LiFePO₄ has an operation voltage of 3.3 to 3.4 V with respect to Li/Li+, which is lower than the operation voltage of positive electrode active materials used for general-application batteries, thus being insufficient in terms of energy density or power density.
In addition, LiMnPO₄ has an operation voltage of 4.1 V with respect to Li/Li+ and a theoretical capacity of 160 mAh/g, thus realizing batteries with a high energy density, but having disadvantages of high inherent resistance of materials and melting of Mn at high temperatures.

Accordingly, batteries satisfying high capacity, high power, long lifespan and superior safety cannot be realized, even if divine-type materials are usued.

Meanwhile, recently, NASICON-type lithium vanadium phosphate, i.e., Li₃V₂(PO₄)₃ attracts much attention as a similar positive electrode active material with superior thermal stability (for example, Patent Document 1: JP-A-2001-500 665). Li₃V₂(PO₄)₃ has an operation voltage of 3.8 V with respect to Li/Li+ and a large capacity of 130 to 195 mAh/g according to respective electric potential plateaus. Furthermore, electric conductivity can be improved and high power can be thus realized by coating conductive carbon on the surface of a positive electrode active material selected from olivine iron materials.

In conventional cases, in order to stabilize characteristics of batteries, secure reliability and safety, and realize high energy, taking into consideration power properties of positive and negative electrodes, it is designed such that relation of x and y satisfies 0.95 < y/x < 1, assuming that the first charge capacity of negative electrode per unit area is x (mAh/cm²) and the first charge capacity of positive electrode per unit area is y (mAh/cm²).
However, in batteries with high power and high capacity, when short-circuit is caused by a sticking of conductive metal foreign materials or the like, a great amount of lithium ions are released from the negative electrode to the positive electrode for a short time. Non-aqueous secondary batteries comprising a positive electrode containing Li₃V₂(PO₄)₃ and lithium nickel composite oxide exhibit good lithium ion receiving property of the positive electrode, but disadvantageously exhibit low lithium ion donor property of the negative electrode, when short-circuit occurs.
This low donor property causes considerable heating of negative electrode and abnormal heating or heating of cells. In the worst case, combustion occurs. When non-aqueous secondary batteries are mounted on mobile equipment such as vehicle equipment, the sticking of the conductive metal foreign materials may occur. Accordingly, abnormal heating or combustion of cells should be prevented.

### SUMMARY OF THE INVENTION

One or more embodiments provide a high power and high capacity non-aqueous electrolyte secondary battery including a positive electrode containing lithium vanadium phosphate, wherein the non-aqueous electrolyte secondary battery provides safety and good cycle properties in which an abnormal heating or combustion of cells does not occur even when a short-circuit is caused by sticking of conductive metal foreign materials or the like.

### BRIEF DESCRIPTION OF THE DRAWINGS

- FIG. 1: is a schematic sectional view illustrating a non-aqueous electrolyte secondary battery (lithium ion secondary battery) according to one exemplary embodiment.
- FIG. 2: is a schematic sectional view illustrating a non-aqueous electrolyte secondary battery (lithium ion secondary battery) according to another exemplary embodiment.

### DETAILED DESCRIPTION OF THE EMBODIMENTS

Embodiments will be described in detail. The embodiments relate to a non-aqueous electrolyte secondary battery. Examples of the non-aqueous electrolyte secondary battery may be lithium ion secondary batteries. As described below, according to the embodiments, configurations of the non-aqueous electrolyte secondary battery are not particularly limited except for a positive electrode and a negative electrode, and conventional techniques may be suitably combined so long as effects of the invention are not impaired.

The non-aqueous electrolyte secondary battery according the embodiments includes a positive electrode including a positive electrode mixture layer containing positive electrode active materials. The positive electrode active materials includes NASICON-type lithium vanadium phosphate, i.e., Li₃V₂(PO₄)₃ and lithium nickel composite oxide.
Further, although the Li₃V₂(PO₄)₃ is explained as an exemplary embodiment of the NASICON-type lithium vanadium phosphate according to the embodiments, the NASICON-type lithium vanadium phosphate which can be expressed as Liₓ V_{2-y} My (PO₄)_{z} (in which M is one or more selected from a group formed by Fe, Co, Mn, Cu, Zn, Al, Sn, B, Ga, Cr, V, Ti, Mg, Ca, Sr, and Zr, and relations of x, y and z satisfy the following conditions 1 ≤ x ≤ 3; 0 ≤ y < 2, and 2 ≤ z ≤ 3) may be used as materials having effects similar to Li₃V₂(PO₄)₃.

### Li₃V₂(PO₄)₃

According to the embodiments, the Li₃V₂(PO₄)₃ may be prepared by any method. For example, the Li₃V₂(PO₄)₃ may be prepared by a method including mixing a lithium source such as LiOH or LiOH·H₂O, a vanadium source such as V₂O₅ or V₂O₃ and a phosphate source such as NH₄H₂PO₄ or (NH₄)₂HPO₄, followed by reacting and baking and the like. The Li₃V₂(PO₄)₃ may be usually in the form of a particle obtained by grinding the baked substance or the like.

Since an electrical conductivity of the Li₃V₂(PO₄)₃ is originally low, it is required to coat surfaces of the Li₃V₂(PO₄)₃ with conductive carbon. Thereby, the electrical conductivity of the Li₃V₂(PO₄)₃ can be improved. A coating amount of conductive carbon is preferably 0.1 to 20 mass % in terms of C atom.

The conductive carbon coating may be performed by a well-known method. For example, the conductive carbon coating can be formed on the surface of Li₃V₂(PO₄)₃ by mixing citric acid, ascorbic acid, polyethylene glycol, sucrose, methanol, propene, carbon black, Ketjen black or the like as a carbon coating material during reaction or baking in the production of Li₃V₂(PO₄)₃.

The particle sizes of the Li₃V₂(PO₄)₃ particles are not particularly limited and those having the desired particle size may be used. Since the particle size affects stability or density of the Li₃V₂(PO₄)₃, the D₅₀ value in the particle size distribution of secondary particles of the Li₃V₂(PO₄)₃ is preferably 0.5 µm to 25 µm.
When the D₅₀ value is lower than 0.5 µm, a contact area with the electrolytic solution increases and stability of the Li₃V₂(PO₄)₃ may be deteriorated. When the D₅₀ value exceeds 25 µm, power may be deteriorated due to deterioration in density. When D₅₀ falls within the range, electric storage devices with superior stability and higher power can be obtained.
In the particle size distribution of secondary particles of the Li₃V₂(PO₄)₃, the D₅₀ value is more preferably 1 µm to 10 µm, particularly preferable 3 µm to 5 µm. Furthermore, in the particle size distribution of secondary particles, the D₅₀ is a value measured using a particle size distribution measuring apparatus based on a laser diffraction (light scattering) manner.

### Lithium nickel composite oxide

According to the embodiments, various lithium nickel composite oxides may be used. A content of Ni element in the lithium nickel composite oxide affects proton absorption property of the lithium nickel composite oxide. According to the embodiments, the Ni element is preferably present in an amount of 0.3 to 0.8 moles, and more preferably 0.5 to 0.8 moles with respect to one mole of lithium atom.
When the content of the Ni element is excessively low, the inhibition effect of elution of vanadium from the Li₃V₂(PO₄)₃ may be insufficient. When the content is within this range, as the content of Ni element increases, the inhibition effect of elution of vanadium from Li₃V₂(PO₄)₃ is improved. Specifically, when the content of the Ni element is 0.5 or more, a capacity maintaining rate is remarkably improved due to the inhibition effect of elution of vanadium.

In addition, according to the embodiments, in the lithium nickel composite oxide, a metal element different from Ni, having an atomic number of 11 or higher may be substituted into the Ni site. The metal element different from Ni, having an atomic number of 11 or higher, is preferably selected from transition metal elements.
The transition elements may have a plurality of oxidation numbers like Ni, thus using the oxidation and reduction range in the lithium nickel composite oxide and maintaining high capacity properties. The metal element different from Ni, having an atomic number of 11 or higher, is for example Co, Mn, Al or Mg, preferably Co or Mn.

According to the embodiments, the lithium nickel composite oxide may be a material expressed for example as Lix Ni_{1-y} M'_{y} O₂ (in which, "x" satisfies 0.8 ≤ x ≤ 1.2, "y" satisfies 0.2 ≤ y ≤ 0.7, and M' is one or more selected from a group including Fe, Co, Mn, Cu, Zn, Al, Sn, B, Ga, Cr, V, Ti, Mg, Ca and Sr). It is preferable that "y" satisfies 0.2 ≤ y ≤ 0.5.

The lithium nickel composite oxide may be prepared by any method. For example, the lithium nickel composite oxide may be prepared by mixing an Ni-containing precursor synthesized by a solid phase reaction method, a coprecipitation method, a sol gel method or the like and a lithium compound at a desired stoichiometric ratio, followed by baking under an air atmosphere or the like.

The lithium nickel composite oxide may be usually in the form of particles obtained by grinding the baked substance. The particle size thereof is not particularly limited and those having the desired particle size may be used. Since the particle size affects stability or density of lithium nickel composite oxide, an average particle size of particles is preferably 0.5 µm to 25 µm. When the average particle size is lower than 0.5 µm, a contact area with the electrolytic solution increases and stability of lithium nickel composite oxide may be deteriorated. When the average particle size exceeds 25 µm, power may be deteriorated due to deterioration in density.
When the average particle size falls within the range, electric storage devices with superior stability and higher power can be obtained. The average particle size of particles of lithium nickel composite oxide is more preferably 1 µm to 25 µm, particularly preferable 5 µm to 20 µm. Furthermore, the average particle size of these particles is a value measured using a particle size distribution measuring apparatus based on a laser diffraction (light scattering) manner.

### Positive Electrode

According to the embodiments, the positive electrode may be prepared by using well-known materials as far as the positive electrode active materials includes the carbon coated Li₃V₂(PO₄)₃ and lithium nickel composite oxide. For example, the positive electrode may be prepared by production processes as described in detail below.

A positive electrode mixture layer is formed by a process including applying a positive electrode slurry obtained by dispersing a mixture including the positive electrode active material, a binder and a conductive agent in a solvent onto a positive electrode collector and drying the applied substance. After drying, pressing may be performed. As a result, the positive electrode mixture layer is uniformly and firmly pressed on the collector. The positive electrode mixture layer preferably has a thickness of 10 µm to 200 µm, preferably 20 µm to 100 µm.

The binder used for formation of the positive electrode mixture layer is for example a fluorine-containing resin such as polyvinylidene fluoride, an acrylic binder, a rubber-based binder such as SBR, a thermoplastic resin such us polypropylene and polyethylene, carboxymethylcellulose or the like. The binder is preferably a fluorine-containing resin or a thermoplastic resin that is chemically and electrochemically stable to non-aqueous electrolytic solution used for electric storage devices of the embodiments, particularly preferably a fluorine-containing resin.
Examples of the fluorine-containing resin include polyvinylidene fluoride as well as polytetrafluoroethylene, vinylidene fluoride-trifluoroethylene copolymers, ethylene-tetrafluoroethylene copolymers and propylene-tetrafluoroethylene copolymers and the like. The content of the binder is preferably 0.5 to 20 % by mass with respect to the positive electrode active material.

The conductive agent used for formation of the positive electrode mixture layer is for example conductive carbon such as Ketjenblack, a metal such as copper, iron, silver, nickel, palladium, gold, platinum, indium or tungsten, or conductive metal oxide such as indium oxide and tin oxide. The content of conductive material is preferably I to 30 mass % with respect to the positive electrode active material.

The solvent used for the formation of the positive electrode mixture layer may be water, isopropyl alcohol, N-methyl pyrrolidone, dimethylformamide or the like.

As far as a surface of the positive electrode collector that contacts the positive electrode mixture layer is a conductive base material having conductivity, the positive electrode collector may be any material. The positive electrode collector is, for example, a conductive base material made of a conductive material such as metal, conductive metal oxide or conductive carbon, or a non-conductive base material coated with a conductive material.
The conductive material is preferably copper, gold, aluminum or an alloy thereof or conductive carbon. The positive electrode collector may be an expanded metal, a punched metal, a foil, a net, a foamed material or the like of the material. In cases of porous materials, the shape or number of through holes is not particularly limited and may be suitably determined so long as the movement of lithium ions is not inhibited.

The content of lithium nickel composite oxide in the positive electrode active material is 5 to 95 mass %. When the content of lithium nickel composite oxide is excessively low, inhibition effects of elution of vanadium from Li₃V₂(PO₄)₃ are not sufficiently exerted and superior cycle properties cannot be obtained. In addition, high capacity cannot be obtained.
On the other hand, when the content of lithium nickel composite oxide is excessively high, elution of vanadium from Li₃V₂(PO₄)₃ can be inhibited, but charge and discharge cycle properties of electric storage devices may be not sufficiently improved. The reason for this would be that low stability of lithium nickel composite oxide causes deterioration. Within this range, high capacity and superior cycle properties can be obtained.

### Negative Electrode

According to the embodiments, the negative electrode includes carbon-based active material capable of intercalating and deintercalating lithium ions, for example lithium intercalation carbon material. A negative electrode slurry obtained by dispersing a mixture including the negative electrode active material and a binder in a solvent is applied to a negative electrode collector, followed by drying to form a negative electrode mixture layer. Furthermore, the binder, the solvent and the collector may be ones similar to those of the aforementioned positive electrode.

In addition, the lithium intercalation carbon material may be, for example, graphite, carbon-based materials such as non-graphitizable carbon, polyacene materials and the like. The polyacene material is for example insoluble and unmeltable PAS having a polyacene skeleton. Furthermore, these lithium intercalation carbon materials are substances that are capable of reversibly doping lithium ions. The negative electrode mixture layer generally has a thickness of 10 to 200 µm, preferably 20 to 100 µm.

Furthermore, according to the embodiments, the coating amounts of negative electrode and positive electrode mixture layers are designed such that relation of x and y is adjusted to 0.6 ≤ y/x ≤ 0.92, assuming that the first charge capacity of negative electrode per unit area is x (mAh/cm²), and the first charge capacity of positive electrode per unit area is y (mAh/cm²), in terms of capacity balance between positive and negative electrodes and energy density, while the relation is set at 0.95 < y/x < 1 in conventional cases.
Here, the coating amount of negative electrode and x, and the coating of positive electrode and y are linearly related to each other, respectively. That is, as the coating amount is doubled, x or y is also doubled.

### Non-aqueous electrolytic solution

According to the embodiments, the non-aqueous electrolytic solution is not particularly limited and may be a well-known non-aqueous electrolytic solution. For example, an electrolytic solution obtained by dissolving a general lithium salt as an electrolyte in an organic solvent may be used in that it does not cause electrolysis even at a high voltage and lithium ions be stably present.

Examples of the electrolyte include CF₃SO₃Li, C₄F₉SO₈Li, (CF₃SO₂)₂NLi, (CF₃SO₂)₃CLi, LiBF₄, LiPF₆, LiClO₄ and combinations thereof.

Examples of the organic solvent include propylene carbonate, ethylene carbonate, buthylene carbonate, dimethyl carbonate, diethyl carbonate, ethylmethyl carbonate, vinyl carbonate, trifluoromethyl propylene carbonate, 1,2-dimethoxyethane, 1,2-diethoxyethane, γ-butyrolactone, tetrahydrofuran, 1,3-dioxolane, 4-methyl-1,3-dioxolane, diethylether, sulfolan, methylsulfolan, acetonitrile, propionitrile and mixtures thereof.

The concentration of electrolyte in the non-aqueous electrolytic solution is preferably 0.1 to 5.0 mol/L, more preferably, 0.5 to 3.0 mol/L.

The non-aqueous electrolytic solution may be a liquid state, a solid electrolyte or a polymer gel electrolyte in which a plasticizer or polymer is incorporated.

### Separator

According to the embodiments, the separator is not particularly limited and may be a well-known separator. For example, a porous material that exhibits durability to an electrolytic solution, a positive electrode active material and a negative electrode active material has communication holes and has no electrical conductivity is preferably used.
Examples of this porous material include woven fabrics, non-woven fabrics, synthetic resin microporous membranes, glass fibers and the like. The synthetic resin microporous membrane is preferably used and a microporous membrane made of polyolefin such as polyethylene or polypropylene is particularly preferably used, in terms of thickness, membrane strength and membrane resistance.

Hereinafter, as an exemplary embodiment of non-aqueous electrolyte secondary battery, an example of lithium ion secondary battery will be described with reference to the drawings.

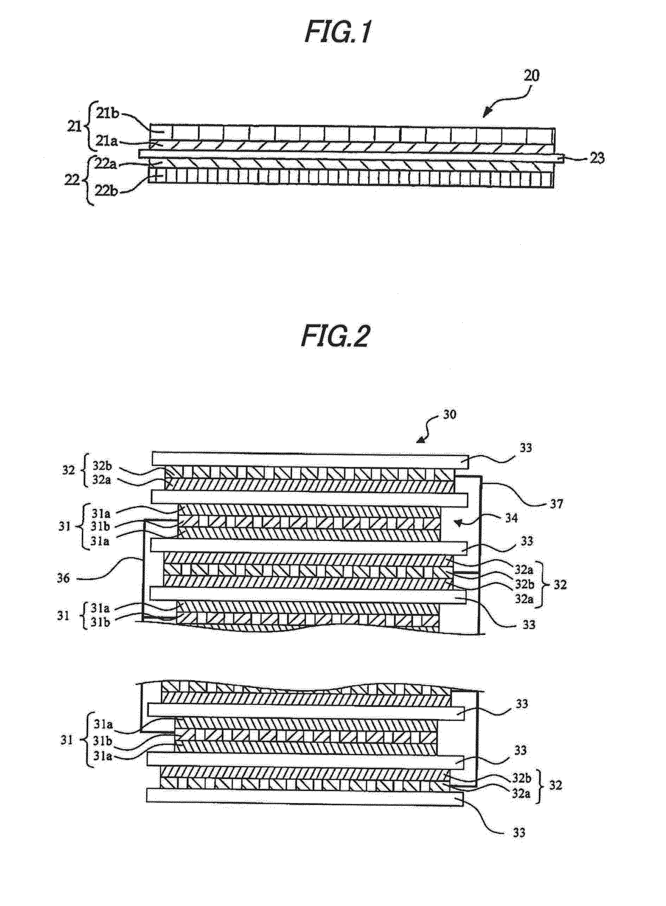

FIG. 1 is a schematic sectional view illustrating a lithium ion secondary battery according to one exemplary embodiment. As shown in FIG. 1, the lithium ion secondary battery 20 includes a positive electrode 21, a negative electrode 22, and a separator 23 interposed between the positive electrode 21 and the negative electrode 22.

The positive electrode 21 includes a positive electrode mixture layer 21a containing a positive electrode active material and a positive electrode collector 21b. The positive electrode mixture layer 21a is disposed on a surface of the positive electrode collector 21b at a side of the separator 23. The negative electrode 22 includes a negative electrode mixture layer 22a and a negative electrode collector 22b. The negative electrode mixture layer 22a is disposed on a surface of the negative electrode collector 22b at a side of the separator 23.
The positive electrode 21, the negative electrode 22, and the separator 23 are mounted in an exterior container (not shown) and the exterior container is filled with a non-aqueous electrolytic solution. Examples of the container include battery cans, laminate films and the like. The positive electrode collector 21b and the negative electrode collector 22b are optionally connected to leads for connections of exterior terminals (not shown).

Then, FIG. 2 is a schematic sectional view illustrating a lithium ion secondary battery according to another exemplary embodiment. As shown in FIG. 2, the lithium ion secondary battery 30 includes an electrode unit 34 in which a plurality of positive electrodes 31 and a plurality of negative electrodes 32 are alternately laminated such that the separator 33 is interposed between the positive electrode 31 and the negative electrode 32.
The positive electrode 31 is provided with a positive electrode mixture layer 31a disposed at each of both surfaces of the positive electrode collector 31b. The negative electrode 32 is provided with a negative electrode mixture layer 32a disposed at each of both surfaces of the negative electrode collector 32b (the uppermost and the lowermost negative electrodes 32 are provided at one surface thereof with a negative electrode mixture layer 32a).
In addition, the positive electrode collector 31b has a protrusion (not shown) and respective protrusions of a plurality of positive electrode collectors 31b overlap one another and a lead 36 is welded to each of the overlapping regions. Similarly, the negative electrode collector 32b has a protrusion ann a lead 37 is welded to each of the overlapping regions of respective protrusions of a plurality of negative electrode collectors 32b.
The lithium ion secondary battery 30 has a structure in which an electrode unit 34 and a non-aqueous electrolytic solution are mounted in an exterior container such as a laminate film (not shown). The leads 36 and 37 are exposed to the outside of the exterior container for connection of the exterior container.

Furthermore, the lithium ion secondary battery 30 may be provided with a lithium electrode to allow lithium ions to be freely doped into a positive electrode and/or a negative electrode. In this case, movement of lithium ions is facilitated, and the positive electrode collector 31b or the negative electrode collector 32b is provided with through holes that extend in the lamination direction of the electrode unit 34.

In addition, the lithium ion secondary battery 30 has a structure in which negative electrodes are arranged in the uppermost and the lowermost parts and is not limited to the structure. The lithium ion secondary battery 30 may have a structure in which positive electrodes are arranged in the uppermost and the lowermost parts.

### EXAMPLES

Hereinafter, examples will be described.

### Example 1

### (1) Production of positive electrode

The following substances for the positive electrode mixture layer were mixed to obtain a positive electrode slurry.

| | |
|---|---|
| First active material (Li₃V₂(PO₄)₃) | 30 parts by mass |
| Second active material (LiNi_{0.8}Co_{0.1}Mn_{0.1}O₂) | 60 parts by mass |
| Binder (polyvinylidene fluoride (PVdF)) | 5 parts by mass |
| Conductive agent (carbon black) | 5 parts by mass |
| Solvent (N-mcthyl2-pyrrolidone (NMP)) | 100 parts by mass |

The positive electrode slurry was applied to a positive electrode collector of an aluminum foil (thickness 30µm), followed by drying to form a positive electrode mixture layer on the positive electrode collector. The coating amount (per one surface) of the positive electrode mixture layer was 14 mg/cm².
After formation of the positive electrode mixture layer, a coated region (region where the positive electrode mixture layer is formed) except an uncoated region with a size of 10 mm × 10 mm as a tab for lead connection was cut to a size of 50 mm × 50 mm. Li₃V₂(PO₄)₃ for the first active material used herein was coated with 1.4 % by mass of carbon in terms of C atom.

### (2) Production of negative electrode

The following substances for the negative electrode mixture layer were mixed to obtain a negative electrode slurry.

| | |
|---|---|
| Active material (graphite) | 95 parts by mass |
| Binder (PVdF) | 5 parts by mass |
| Solvent (NMP) | 150 parts by mass |

The negative electrode slurry was applied to a negative electrode collector of an aluminum foil (thickness 10 µm), followed by drying to form a negative electrode mixture layer on the negative electrode collector. The coating amount (per one surface) of the negative electrode mixture layer was 7.2 mg/cm². A relation of x and y was adjusted to y/x = 0.9, assuming that the first charge capacity of negative electrode per unit area was x (mAh/cm²) and the first charge capacity of positive electrode per unit area was y (mAh/cm²).
After formation of the negative electrode mixture layer, a coated region (region where the negative electrode mixture layer was formed) except an uncoated region with a size or 10 mm × 10 mm as a tab for lead connection was cut to a size of 52 mm × 52 mum.

### (3) Fabrication of battery

A lithium ion secondary battery according to the embodiment shown in FIG. 2 was fabricated using 19 pieces of positive electrodes and 20 pieces of negative electrodes thus produced. Specifically, the positive electrodes and the negative electrodes were laminated such that separators were interposed therebetween, and set with a tape around the laminate. The tabs of respective positive electrode collectors were stacked and aluminum metal leads were welded. Similarly, the tabs of respective negative electrode collectors were stacked and nickel metal leads were welded.
These structures were mounted in an aluminum laminate exterior material, the positive electrode leads and the negative electrode leads were separated from the exterior material and airtight bonding was performed except an electrolytic solution injection inlet. The electrolytic solution was injected through the electrolytic solution injection inlet and permeated into the electrode by impregnation under vacuum, and the laminate was sealed under vacuum.

### (4) Charge and discharge test

The positive electrode leads and the negative electrode leads of batteries thus fabricated were connected to the corresponding terminals of a charge and discharge tester (manufactured by Asuka Electronics Co. Ltd.) and constant-voltage constant-current charged at a maximum voltage of 4.2 V and a current rate of 2 C and constant-current discharged at a current rate 5 C up to 2.5 V after charge. These processes were repeated 1000 cycles.
An energy density (Wh/kg) was calculated from the capacity measured during the first discharge and a cycle capacity maintenance ratio (discharge capacity during 1000 cycles/discharge capacity during the first cycle×100) was calculated from the capacity after cycles. The capacity maintenance ratio was 92 %. The measurement results are shown in Table 1.

### (5) Nail piercing test

The positive electrode leads and the negative electrode leads of batteries thus fabricated were connected to the corresponding terminals of a charge and discharge tester (manufactured by Asuka Electronics Co. Ltd.) and constant-voltage constant-current charged at a maximum voltage of 4.2 V and a current rate of 5 C. An iron nail with a diameter of 5 mm was prepared and a lithium ion secondary battery was put on a substrate made of a metal. The nail was pierced at a nail piercing rate of 15 mm/sec in the center of lithium ion secondary battery in the lamination direction of positive and negative electrodes and passed through an aluminum laminate.
The aluminum laminate was observed 10 minutes after the nail was pierced, but abnormal heating and combustion of cells did not occur. The observation results are shown in Table 1. In Table 1, "GOOD" means that abnormal heating and combustion were not observed and "NG" means that abnormal heating and combustion occurred.

### Example 2

A battery was fabricated and tested in the same manner as in Examples 1, except that the coating amount (per one surface) of the negative electrode mixture layer was changed into 10.6 mg/cm² such that relation of x and y satisfied y/x = 0.6, assuming that the first charge capacity of negative electrode per unit area was x (mAh/cm²) and the first charge capacity of positive electrode per unit area was y (mAh/cm²). The capacity maintenance ratio was 87 % and abnormal heating and combustion did not occur in the safety test using nail piercing.

### Example 3

A battery was fabricated and tested in the same manner as in Example 1, except that the coating amount (per one surface) of the negative electrode mixture layer was changed into 7.6 mg/cm² such that relation of x and y satisfied y/x = 0.85, assuming that the first charge capacity of negative electrode per unit area was x (mAh/cm²) and the first charge capacity of positive electrode per unit area was y (mAh/cm²). The capacity maintenance ratio was 91 % and abnormal heating and combustion did not occur in the safety test using nail piercing.

### Comparative Example 1

A battery was fabricated and tested in the same manner as in Example 1, except that the coating amount (per one surface) of the negative electrode mixture layer was changed into 6.8 mg/cm² such that relation of x and y satisfied y/x = 0.95, assuming that the first charge capacity of negative electrode per unit area was x (mAh/cm²) and the first charge capacity of positive electrode per unit area was y (mAh/cm²). The capacity maintenance ratio was 92 % and abnormal heating and combustion did not occur in the safety test using nail piercing.

### Comparative Example 2

A battery was fabricated and tested in the same manner as in Example 1, except that the coating amount (per one surface) of the negative electrode mixture layer was changed into 11.7 mg/cm² such that relation of x and y satisfied y/x = 0.55, assuming that the first charge capacity of negative electrode per unit area was x (mAh/cm²) and the first charge capacity of positive electrode per unit area was y (mAh/cm²). The capacity maintenance ratio was 78 % and abnormal heating and combustion did not occur in the safety test using nail piercing. The results of Examples 1 to 3 and Comparative Examples 1 and 2 are shown in Table 1.

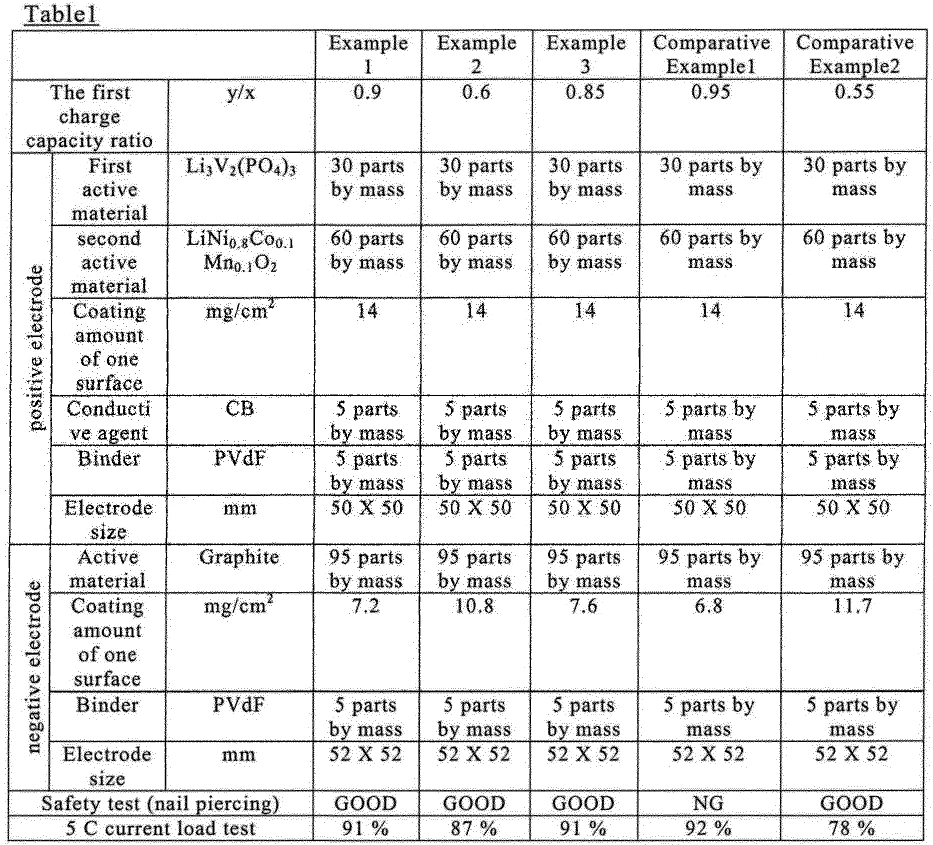

### Example 4

A battery was fabricated and tested in the same manner as in Example 1, except that the coating amount (per one surface) of the negative electrode mixture layer was changed into 7.0 mg/cm² such that relation of x and y satisfied y/x = 0.92, assuming that the first charge capacity of negative electrode per unit area was x (mAh/cm²) and the first charge capacity of positive electrode per unit area was y (mAh/cm²). The capacity maintenance ratio was 90 % and abnormal heating and combustion did not occur in the safety test using nail piercing.

### Example 5

A battery was fabricated and tested in the same manner as in Example 1, except that the second active material of the positive electrode mixture layer was changed to LiNi_{0.8}Co_{0.1}Al_{0.1}O₂, and the coating amount (per one surface) of the negative electrode mixture layer was changed into 7.3 mg/cm² such that relation of x and y satisfied y/x = 0.92, assuming that the first charge capacity of negative electrode per unit area was x (mAh/cm²) and the first charge capacity of positive electrode per unit area was y (mAh/cm²). The capacity maintenance ratio was 90 % and abnormal heating and combustion did not occur in the safety test using nail piercing.

### Example 6

A battery was fabricated and tested in the same manner as in example 1, except that the second active material of the positive electrode mixture layer was changed to LiNi_{0.6}Co_{0.2}Mn_{0.2}O₂, and the coating amount (per one surface) of the negative electrode mixture layer was changed into 6.1 mg/cm² that relation of x and y satisfied y/x = 0.92, assuming that the first charge capacity of negative electrode per unit area was x (mAh/cm²) and the first charge capacity of positive electrode per unit area was y (mAh/cm²). The capacity maintenance ratio was 89 % and abnormal heating and combustion did not occur in the safety test using nail piercing.

### Examples 7

A battery was fabricated and tested in the same manner as in Examples 1, except that the second active material of the positive electrode mixture layer was changed to LiNi_{0.5}Co_{0.3}Mn_{0.2}O₂, and the coating amount (per one surface) of the negative electrode mixture layer was changed into 6.1 mg/cm² such that relation of x and y satisfied y/x = 0.92, assuming that the first charge capacity of negative electrode per unit area was x (mAh/cm²) and the first charge capacity of positive electrode per unit area was y (mAh/cm²). The capacity maintenance ratio was 89 % and abnormal heating and combustion did not occur in the safety test using nail piercing.

### Comparative Example 3

A battery was fabricated and tested in the same manner as in Example 1, except that the second active material of the positive electrode mixture layer was changed to LiNi_{0.6}Co_{0.2}Mn_{0.2}O₂, and the coating amount (per one surface) of the negative electrode mixture layer was changed into 5.9 mg/cm² such that relation of x and y satisfied y/x = 0.95, assuming that the first charge capacity of negative electrode per unit area was x (mAh/cm²) and the first charge capacity of positive electrode per unit area was y (mAh/cm²). The capacity maintenance ratio was 90 % and abnormal heating and combustion occurred in the safety test using nail piercing.

### Comparative Example 4

A battery was fabricated and tested in the same manner as in Example 1, except that the second active material of the positive electrode mixture layer was changed to LiNi_{0.5}Co_{0.3}Mn_{0.2}O₂, and the coating amount (per one surface) of the negative electrode mixture layer was changed into 5.9 mg/cm² such that relation of x and y satisfied y/x = 0.95, assuming that the first charge capacity of negative electrode per unit area was x (mAh/cm²) and the first charge capacity of positive electrode per unit area was y (mAh/cm²). The capacity maintenance ratio was 90 % and abnormal heating and combustion occurred in the safety test using nail piercing.

### Comparative Example 5

A battery was fabricated and tested in the same manner as in Example 1, except that the second active material of the positive electrode mixture layer was changed to LiNi_{0.6}Co_{0.2}Mn_{0.2}O₂, and the coating amount (per one surface) of the negative electrode mixture layer was changed into 10 mg/cm² such that relation of x and y satisfied y/x = 0.55, assuming that the first charge capacity of negative electrode per unit area was x (mAh/cm²) and the first charge capacity of positive electrode per unit area was y (mAh/cm²). The capacity maintenance ratio was 76 % and abnormal heating and combustion does not occur in the safety test using nail piercing.

### Comparative Example 6

A battery was fabricated and tested in the same manner as in Example 1, except that the second active material of the positive electrode mixture layer was changed to LiNi_{0.5}Co_{0.3}Mn_{0.2}O₂, and the coating amount (per one surface) of the negative electrode mixture layer was changed into 10 mg/cm² such that relation of x and y satisfied y/x = 0.55, assuming that the first charge capacity of negative electrode per unit area was x (mAh/cm²) and the first charge capacity of positive electrode per unit area was y (mAh/cm²). The capacity maintenance ratio was 75 % and abnormal heating and combustion does not occur in the safety test using nail piercing.
The results of Examples 4 to 7 and Comparative Examples 3 to 6 are shown in Tables 2 and 3.

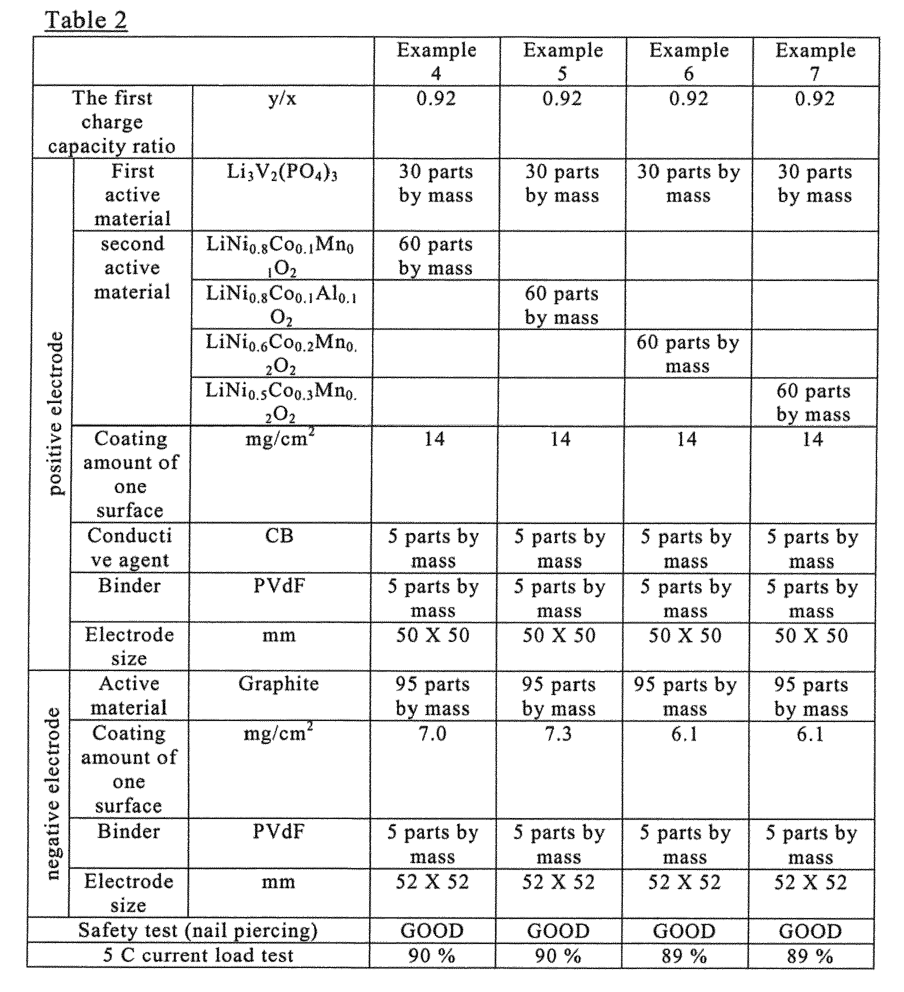

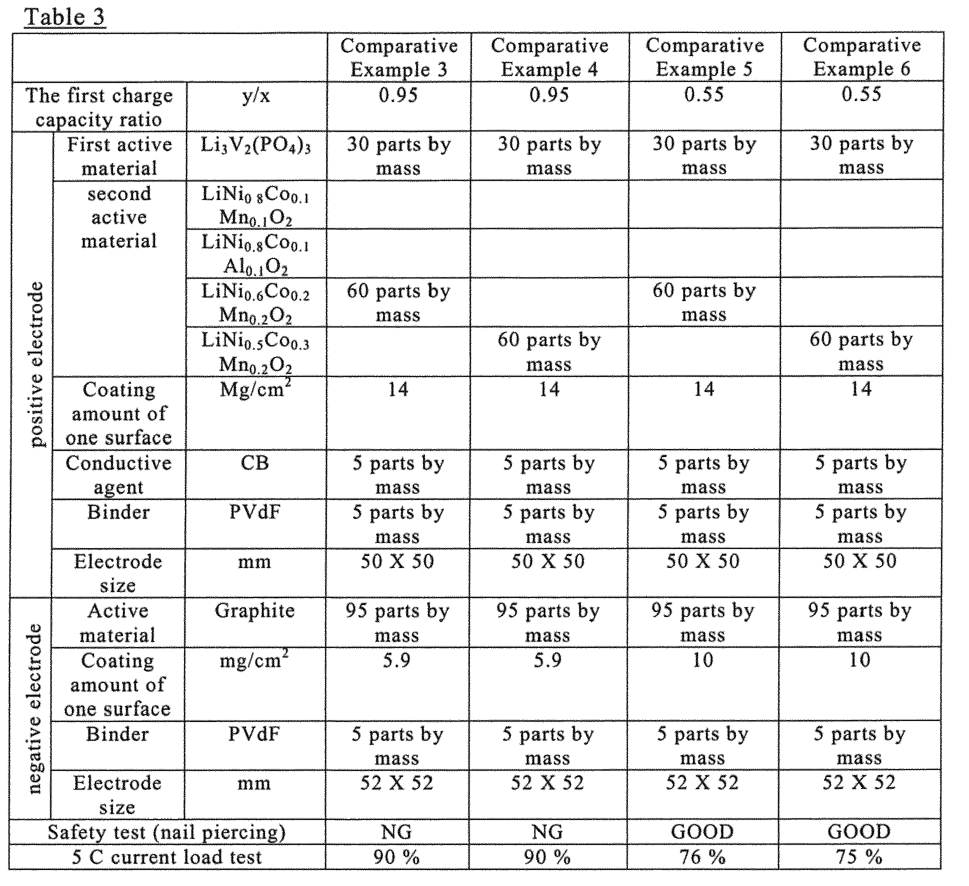

As can be seen from the test results of Examples 1 to 7, when the value of y/x was adjusted within the range of 0.6 to 0.92, assuming that the first charge capacity of negative electrode per unit area was x (mAh/cm²) and the first charge capacity of positive electrode per unit area was y (mAh/cm²), the lithium deintercalation margin of negative electrode increased and good results could be obtained in safety test using nail piercing.
When the value of y/x was lower than the lower limit, 0.6, good results could be obtained in the safety test using nail piercing, but good results could not be obtained in the current load test. The reason for this is thought that deintercalation margin of lithium ions on the negative electrode is excessively high, causing unbalance in charge capacity between the positive electrode and the negative electrode.
In addition, it is thought that, when the value of y/x is higher than 0.92, in the safety test using nail piercing, deintercalation margin of lithium ions on the negative electrode is low, similar to conventional cases, causing abnormal heating of cells.

Furthermore, the present invention is not limited to the construction of aforementioned embodiments and Examples, but various modifications are possible within the scope of the subject matters of the invention.

In accordance with the embodiments, a non-aqueous electrolyte secondary battery may include a positive electrode active material including a carbon-coated lithium vanadium phosphate and a lithium nickel composite oxide, and a negative electrode active material including a carbon-based active material capable of intercalating and deintercalating lithium ions.
When a first charge capacity of a negative electrode per unit area is "x" (mAh/cm²) and a first charge capacity of a positive electrode per unit area is "y" (mAh/cm²), a relation of "x" and "y" may satisfy 0.6 ≤ y/x ≤ 0.92.
The lithium vanadium phosphate may be expressed as Liₓ V_{2-y} M_{y} (PO₄)_{z}, in which M is one or more selected from a group formed by Fe, Co, Mn, Cu, Zn, Al, Sn, B, Ga, Cr, V, Ti, Mg, Ca, Sr, and Zr, and in which a relation of x, y and z satisfies the conditions 1 ≤ x ≤ 3; 0 ≤ y < 2, and 2 ≤ z ≤ 3. For example, the lithium vanadium phosphate may be Li₃V₂(PO₄)₃.

According to the embodiments, a positive electrode active material includes carbon-coated lithium vanadium phosphate and lithium nickel composite oxide, and a negative electrode active material comprises a carbon-based active material capable of intercalating and deintercalating lithium ions. Here, the lithium deintercalation margin of negative electrode is set at a higher level than in conventional cases.
Specifically, the lithium deintercalation margin of the negative electrode is adjusted to a high level such that the relation of x and y satisfies 0.6 ≤ y/x ≤ 0.92, assuming that the first charge capacity of negative electrode per unit area is x (mAh/cm²), and the first charge capacity of positive electrode per unit area is y (mAh/cm²).

Accordingly, a non-aqueous electrolyte secondary battery in which a donor property of lithium ions from the negative electrode is improved so that an abnormal heating or combustion of cells does not occur even when a short-circuit is caused by a sticking of conductive metal foreign materials or the like and safety and superior cycle properties can be exhibited can be provided.

According to the embodiments, since the non-aqueous electrolyte secondary battery uses carbon-coated lithium vanadium phosphate and lithium nickel composite oxide as positive electrode active materials, high power and superior safety as well as high capacity, and good charge and discharge properties can be obtained by setting an amount of lithium nickel composite oxide in the positive electrode active material.

### List of Reference Signs

- 20: = secondary battery
- 21: = positive electrode
- 21a: = positive electrode mixture layer
- 21b: = positive electrode collector
- 22: = negative electrode
- 22a: = negative electrode mixture layer
- 22b: = negative electrode collector
- 23: = separator
- 30: = secondary battery
- 31: = positive electrode
- 31a: = positive electrode mixture layer
- 31b: = positive electrode collector
- 32: = negative electrode
- 32a: = negative electrode mixture layer
- 32b: = negative electrode collector
- 33: = separator
- 34: = electrode unit
- 36: = lead
- 37: = lead

## Claims

1. A non-aqueous electrolyte secondary battery comprising:
- a positive electrode active material including a carbon-coated lithium vanadium phosphate and a lithium nickel composite oxide; and
- a negative electrode active material including a carbon-based active material capable of intercalating and deintercalating lithium ions,
- wherein a first charge capacity of a negative electrode per unit area is x (mAh/cm²);
- wherein a first charge capacity of a positive electrode per unit area is y (mAh/cm²); and
- wherein a relation of x and y satisfies the condition 0.6 ≤ y/x ≤ 0.92.

2. The battery according to claim 1,
wherein the first charge capacity of the negative electrode and the first charge capacity of the positive electrode are respectively determined by a coating amount of the negative electrode and a coating amount of the positive electrode.

3. The battery according to claim 1 or 2,
wherein the positive electrode active material includes the lithium nickel composite oxide by 5 to 95 mass %.

4. The battery according to any one of claims 1 to 3,
wherein the lithium nickel composite oxide includes the nickel element by 0.5 to 0.8 mol with respect to the lithium element of 1 mol.

5. The battery according to any one of claims 1 to 4,
wherein the lithium nickel composite oxide includes a metallic element which has an atomic number of 11 or more and is other than Ni.

6. The battery according to claim 5,
wherein the metallic element is an element selected from Co, Mn, Al and Mg.

7. The battery according to any one of claims 1 to 6,
wherein the lithium vanadium phosphate is expressed as Liₓ V_{2-y} M_{y} (PO₄)_{z},
wherein M is one or more selected from a group formed by Fe, Co, Mn, Cu, Zn, Al, Sn, B, Ga, Cr, V, Ti, Mg, Ca, Sr, and Zr, and wherein the relations of x, y and z satisfy the following conditions: 1 ≤ x ≤ 3; 0 ≤ y < 2, and 2 ≤ z ≤ 3.
